# FASCICULE DE BREVET EUROPEEN

(11) **EP 0 821 165 B1**
(45) Date de publication et mention de la délivrance du brevet: **26.03.2003**
(21) Numéro de dépôt: 97401577.8
(22) Date de dépôt: 03.07.1997
(51) Int. Cl.: F04B 49/025, H01H 36/02

(54) **Commande de mise en marche d'une pompe submersible**
Steuervorrichtung zum An- und Ausschalten von einer Unterwasserpumpe
Control device for starting and stopping a submersible pump

(30) Priorité: 22.07.1996 FR 9609154
(43) Date de publication de la demande: 28.01.1998
(73) Titulaire: KSB S.A.S, 92230 Gennevilliers (FR)
(72) Inventeur: Mabillot, Christian, 36000 Chateauroux (FR); Rivalland, Sébastian, 36270 Eguzon (FR)
(74) Mandataire: Eidelsberg, Victor Albert

(56) Documents cités:
- DE-A- 1 922 482
- DE-A- 3 622 516
- FR-A- 2 492 154
- GB-A- 724 125
- US-A- 5 007 450
- US-A- 5 374 790

## Description

### Domaine technique

L'invention concerne une commande de mise en marche d'une pompe submersible réglable comportant un axe de commande d'un système d'enclenchement de pompe et un dispositif flottant réglable qui tourne l'axe de commande suivant le niveau d'eau.

Ces pompes sont placées dans un bassin ou réservoir d'eau et le dispositif flottant varie sa position selon le niveau d'eau dans le bassin. En général, en position correspondant à un niveau d'eau supérieur la pompe démarre pour vider le bassin. Le dispositif flottant descend avec le niveau d'eau jusqu' à ce qu'un niveau d'eau inférieur est atteint et la pompe est arrêtée.

Pour adapter les points de mise en marche resp. d'arrêt aux conditions spécifiques de chaque utilisateur, le dispositif flottant est monté d'une manière réglable à la pompe.

### État de la technique

La solution habituellement utilisée par le demandeur pour un système de mise en marche comme décrit dans le document FR 2 492 154 prévoyait une roue dentée intérieure coopérant avec une roue dentée extérieure logées sous un couvercle protégant le système de mise en marche à l'extérieur du corps de refoulement.

Pour régler la position du flotteur relative à la position du système de mise en marche on dévissait le couvercle et changeait la position des roues dentées relatives l'une à l'autre pour finalement refermer le couvercle.

Le but de l'invention est de trouver une solution simplifiée pour régler la position du flotteur.

### Exposé de l'invention

La commande selon l'invention est caractérisée en ce que le dispositif flottant réglable est bloqué par friction sur l'axe de commande en déformant un joint en élastomère placé entre une protubérance de fixation du dispositif flottant et l'axe de commande.

Grâce à l'invention la position du flotteur peut être réglé de l'extérieur.

Le mode de réalisation avec la protubérance munie d'une lèvre circonférentielle à l'avantage de créer une barrière d'entrée des impuretés et d'étancher le système d'enclenchement.

### Présentation des différentes figures

Les dessins annexés illustrent l'invention réalisée dans un flottant réglable.
- La fig. 1: représente en coupe le système d'enclenchement et le dispositif flottant réglable.

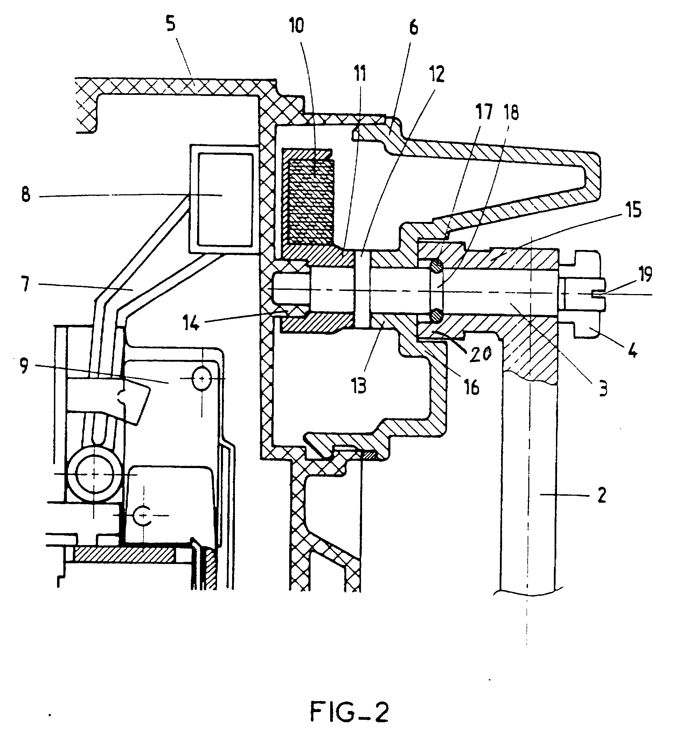

- La fig. 2: représente en coupe un agrandissement de la fixation du dispositif flotteur sur un axe de commande.

### Modes de réalisation

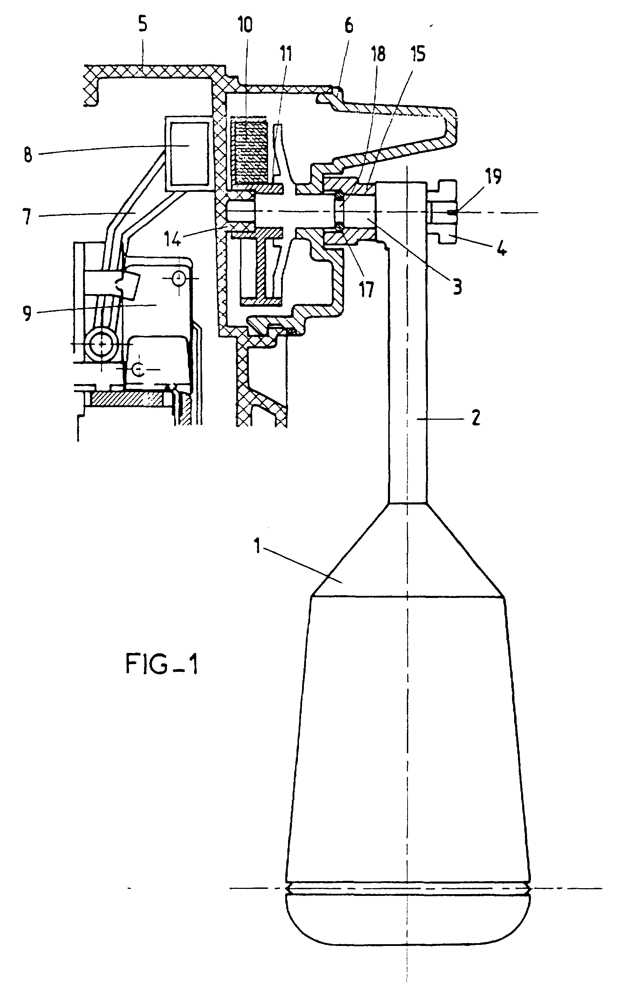

La commande de mise en marche de pompe submersible selon l'invention, représentée à la fig. 1, comporte un corps flotteur 1 rélié par une tige 2 à un axe de commande 3 de mise en marche de pompe. La tige 2 est traversée par l'axe 3 et y est retenue par un écrou 4 vissé sur un bout de l'axe 3. L'axe 3 est logé d'une part dans un corps de refoulement S et d'autre part dans un couvercle 6 couvrant des parties extérieures 10, 11 d'un système de mise en marche 7 à 11.

L'axe 3 est retenu dans le couvercle 6 par une collerette 12 placée entre une partie saillante 13 du couvercle 6 formant un logement de l'axe 3 et un logement 14 côté corps 5.

Une cage d'aimant 11 est reliée avec l'axe et tourne avec celui-ci lorsque l'axe 3 est entraîné en rotation par le flotteur. Le cage d'aimant 10 porte un aimant 11 qui coopère avec un autre aimant 8 à l'intérieur du corps de refoulement 5.

La tige 2 comporte à son bout traversé par l'axe 3 une protubérance 15 étant partiellement reçue par un emboîtement 16 du couvercle 6. La protubérance 15 s'appuie contre un joint torique 17 en élastomère logé dans une rainure 18 de l'axe 3. Grâce à la déformation du joint une force de friction est créée entre la protubérance 15 de la tige 2 et l'axe 3 qui assure l'entraînement en rotation de l'axe 3 par la tige 2 quand cette dernière est tournée.

Pour régler la position du flotteur 1 relative à l'axe 3 on dévisse l'écrou 4. On maintient l'axe 3 en position fixe à l'aide d'une pince ou d'un tournevis engagé dans une rainure 19 au bout de l'axe 3. Puis, on tourne la tige 2 du flotteur 1 autour de l'axe 3.

Le niveau d'enclenchement pour le démarrage de la pompe et le niveau de déclenchement pour l'arrêt de la pompe est réglé suivant deux possibilités. En tournant le flotteur 1 dans le sens des aiguilles d'une montre le niveau d'eau d'enclenchement de la pompe devient plus élevé, dans le sens anti-horaire le niveau d'eau d'enclenchement de la pompe devient plus bas.

Après avoir réglé la position du flotteur selon le niveau d'eau désiré on revisse l'écrou 4 et bloque ainsi par la force de friction créée entre la protubérance 15 et l'axe 3 la rotation d'une pièce relative à l'autre.

Il s'entend de soi que la protuberance 15 de la tige 2 peut être réalisé en plusieurs pièces, par exemple en une bague d'entraînement connectée à la tige 2 par des dents en relief venant s'encastrer dans les creux correspondants.

Pour protéger les parties, extérieures 10, 11 du système de mise en marche 7 à 11 contre des impuretés la protubérance 15 est munie à sa surface extérieure d'une partie élargie 20 s'étendant à proximité de la surface intérieure de l'emboîtement 16.

## Revendications

1. Commande de mise en marche d'une pompe submersible réglable comportant un axe (3) de commande d'un système d'enclenchement de pompe et un dispositif flottant réglable qui fait tourner l'axe (3) de commande en suivant le niveau d'eau, **caractérisé en ce que** le dispositif (1) flottant réglable est bloqué par friction sur l'axe (3) de commande en déformant un joint en élastomère placé entre une protubérance (15) de fixation du dispositif (1) flottant et l'axe (3) de commande.

2. Commande de mise en marche d'une pompe submersible selon la revendication 1, **caractérisé en ce que** la protubérance est munie vers la fin d'une partie élargie (20) circonférentielle extérieure.

## Patentansprüche

1. Einschaltsteuerung einer regulierbaren Tauchpumpe, die eine Steuerachse (3) für ein Einschaltsystem der Pumpe und eine regulierbare Schwimmervorrichtung enthält, welche die Steuerachse (3) je nach Wasserstand dreht, **dadurch gekennzeichnet, dass** die regulierbare Schwimmervorrichtung (1) auf der Steuerachse durch Reibung blockiert wird, wobei ein Dichtring aus Elastomer deformiert wird, der zwischen einem Befestigungsvorsprung (15) der Schwimmervorrichtung (1) und der Steuerachse (3) platziert ist.

2. Einschaltsteuerung einer Tauchpumpe gemäß Anspruch 1, **dadurch gekennzeichnet, dass** der Vorsprung (15) am Ende mit einem verlängerten umgebenden äußeren Teil (20) ausgestattet ist.

## Claims

1. Control for starting up an adjustable submersible pump comprising a spindle (3) for controlling a system switching on the pump and an adjustable floating device which makes the control spindle (3) rotate depending on the water level, **characterized in that** the adjustable floating device (1) is locked by friction onto the control spindle (3) by deforming an elastomer seal placed between a protuberance (15) for fastening the floating device (1) and the control spindle (3).

2. Control for starting up a submersible pump according to Claim 1, **characterized in that** the protuberance is fitted towards the end with an external circumferential enlarged part (20).
